# EUROPEAN PATENT SPECIFICATION

(11) **EP 4 075 992 B1**
(45) Date of publication and mention of the grant of the patent: **24.12.2025**
(21) Application number: 20812205.1
(22) Date of filing: 09.11.2020
(51) Int. Cl.: A23D 7/005, A23D 7/01, A23D 9/007, C11B 1/00, C11B 3/16

(54) **ISOLATED OLEOSOME COMPOSITION AND PROCESS FOR PREPARING IT**
OLEOSOMZUSAMMENSETZUNG UND VERFAHREN ZU IHRER HERSTELLUNG
COMPOSITION D'OLÉOSOMES ET SON PROCÉDÉ DE PRÉPARATION

(30) Priority: 16.12.2019 EP 19216536; 15.01.2020 EP 20151967; 12.05.2020 EP 20174113
(43) Date of publication of application: 26.10.2022
(73) Proprietor: Cargill, Incorporated, Wayzata, Minnesota 55391 (US)
(72) Inventor: BILLECKE, Nils, 1640 Sint-Genesius-Rode (BE); GOOSSENS, Eliane, 2845 Niel (BE); WASCHATKO, Gustav, 1040 Etterbeek (BE)
(74) Representative: Elseviers, Myriam
(86) International application number: PCT/US2020/059607
(87) International publication number: WO 2021/126408

(56) References cited:
- WO-A1-2017/066569
- US-A1- 2007 207 254
- DELEU M ET AL: "Interfacial properties of oleosins and phospholipids from rapeseed for the stability of oil bodies in aqueous medium", COLLOIDS AND SURFACES. B, BIOINTERFACES, ELSEVIER, AMSTERDAM, NL, vol. 80, no. 2, 15 October 2010 (2010-10-15), pages 125 - 132, XP027169271, ISSN: 0927-7765, [retrieved on 20100601]
- MAURER S ET AL: "Microencapsulation of soybean oil by spray drying using oleosomes", JOURNAL OF PHYSICS D: APPLIED PHYSICS, INSTITUTE OF PHYSICS PUBLISHING LTD, GB, vol. 49, no. 5, 16 December 2015 (2015-12-16), pages 54001, XP020297993, ISSN: 0022-3727, [retrieved on 20151216], DOI: 10.1088/0022-3727/49/5/054001
- JIAN DING ET AL: "Thermally treated soya bean oleosomes: the changes in their stability and associated proteins", INTERNATIONAL JOURNAL OF FOOD SCIENCE AND TECHNOLOGY., vol. 55, no. 1, 9 February 2019 (2019-02-09), GB, pages 229 - 238, XP055771733, ISSN: 0950-5423, DOI: 10.1111/ijfs.14266

## Description

### FIELD OF THE INVENTION

The invention relates to a process for enlarging oleosomes by subjecting oleosomes to a high-shear mixing and/or a high-shear centrifugal force. The invention further relates to oleosome compositions. It also relates to food and feed products, pharmaceutical products, personal care products, nutritional compositions and industrial products comprising said oleosome composition. The invention further relates to the process of preparing nutritional compositions comprising oleosome compositions.

### BACKGROUND OF THE INVENTION

Oleosomes, also known as "oil bodies", "lipid bodies", "lipid droplets" or "spherosomes", are pre-emulsified droplets or vesicles of oil stored in plant seeds and used as energy source for plant growth and metabolism.

Oleosomes are typically extracted from cells by a process of grinding the seeds and subsequently washing, filtering and homogenising the ground seeds to form an aqueous suspension. Said suspension is centrifuged to separate the oleosomes.

Washed and purified oleosomes are mainly typically used for their excellent emulsification capacity.

Deleu in XP02716271 describes interfacial propertes of oleosins and phospholipids from rapeseed for the stability of oil bodies in aqueous medium.

Maurer in XP20297993 describes microencapsulaton of soybean oil by spray drying using oleosomes.

WO 2017/066569 relates to a composition containing first oleosomes having a first distribution D50(1) and second oleosomes having a second size distribution D50(2).

Jian Ding describes in XP55771733 thermally treated soybean oleosomes and the changes in their stability and associated proteins

Emulsions, which are mixtures of two mutually insoluble components, the most known being water and oil, are widely used in formulations of various products. Typical emulsions have an average lipid globule diameter of less than 1 micron. Emulsion stability is decreasing with increasing lipid droplet size. Emulsifiers are needed to stabilize the emulsion.

There is a need for stable emulsions with an increased lipid globule diameter and without added emulsifiers.

### SUMMARY OF THE INVENTION

The current invention relates to a process for enlarging oleosomes and the process comprises subjecting isolated oleosomes to a high-shear mixing and/or a high-shear centrifugal force, and obtaining an oleosome composition, wherein the high-shear mixing is applied by means of a rotor-stator high-shear mixer at a tip velocity in a range of from 1.6 to 12.8 m/s, or wherein the high-shear centrifugal force is applied by means of a disk-stack centrifuge at a rotational speed in a range of from 15000 g to 20000 g.

The invention also relates to an oleosome composition that is originating from a vegetable source selected from the group consisting of rapeseed, soybean, sunflower, high-oleic sunflower, brown linseed and yellow linseed, and wherein the isolated oleosome composition from rapeseed has an average globule diameter of at least 0.8 micron, or wherein the isolated oleosome composition from soybean has an enlarged average globule diameter of at least 0.7 micron, or wherein the isolated oleosome composition from sunflower has an average globule diameter of at least 5.6 micron, or wherein the isolated oleosome composition from high oleic sunflower has an average globule diameter of at least 1.4 micron, or wherein the isolated oleosome composition from brown linseed has an average globule diameter of at least 1.4 micron, or wherein the isolated oleosome composition from yellow linseed has an average globule diameter of at least 3.2 micron. The process for preparing the isolated oleosomes and their average globule diameter is as defined in the claims, as is the scope of the present invention, and the products and use to which it relates.

The invention relates also to products selected from food products, feed products, pharmaceutical products, personal care products, nutritional compositions and industrial products wherein the product is comprising the isolated oleosome composition according to the invention in an amount of from 1 to 70 weight% on total product weight.

The current invention further relates to a process for preparing the nutritional composition according to the invention comprising the isolated oleosome composition, and the process is comprising the step of blending the isolated oleosome composition with the at least one other nutritional ingredient other than the oleosome composition, and wherein the process is not comprising a further step of emulsification of the oleosome composition with the at least on other nutritional composition.

Finally, the current invention relates to the use of a rotor-stator high-shear mixer and/or a disk-stack centrifuge for enlarging the average globule diameter of oleosomes in an oleosome composition.

### DETAILED DESCRIPTION

The current invention is as defined in the claims and relates to a process for enlarging oleosomes and the process comprises subjecting isolated oleosomes to a high-shear mixing and/or a high-shear centrifugal force, and obtaining an oleosome composition, wherein the high-shear mixing is applied by means of a rotor-stator high-shear mixer at a tip velocity in a range of from 1.6 to 12.8 m/s, or wherein the high-shear centrifugal force is applied by means of a disk-stack centrifuge at a rotational speed in a range of from 15000 g to 20000 g.

### Isolated oleosome

"Oleosomes" are defined as oleosomes or organelles that are present in cells by nature for storage of oil.

The isolated oleosome in the process according to the invention are obtained, taken, extracted and/or isolated from plant cells, fungal cells, yeast cells, bacterial cells or algae cells.

In one aspect of the invention the isolated oleosomes are obtained from cells from pollens, spores, seeds or vegetative plant organs in which oleosomes or oleosomes-like organelles are present. Preferably, the sources of origin of the oleosomes used in accordance with the invention are members of the Brassicaceae, Amaranthaceae, Asparagaceae, Echium, Glycine, Astaraceae, Fabaceae, Malvaceae, Faboidae, Aracaceae, Euphorbiceae, Sinapsis, Lamiaceae, Cyperaceae, Anacardiaceae, Rosaceae, Betulaceae, Juglandaceae, Oleaceae, Lauraceae, Sapotaceae and/or Poaceae families. More preferably, the isolated oleosomes are obtained from a plant seed and most preferably from the group of plant species comprising: rapeseed (Brassica spp.), soybean (Glycine max), sunflower (Helianthus annuits), oil palm (Elaeis guineeis), cottonseed (Gossypium spp.), groundnut (Arachis hypogaea), coconut (Cocus nucifera), castor (Ricinus communis), safflower (Carthamus tinctorius), mustard (Brassica spp. and Sinapis alba), coriander (Coriandrum sativum), squash (Cucurbita maxima), linseed/flax (Linum usitatissimum) (including brown (also called bronze) and yellow (also called gold) linseed), Brazil nut (Bertholletia excelsa), hazelnut (Corylus avellana), walnut (Juglands major), jojoba (Simmondsia chinensis), thale cress (Arabidopsis thaliana), wheat and wheat germ (Triticum spp.), maize and maize germ (Zea mays), amaranth (family of Amaranthus), sesame (Sesamum indicum), oat (Avena sativa), camelina (Camelina sativa), lupin (Lupinus), peanut (Arachis hypogaea), quinoa (Chenopodium quinoa), chia (Salvia hispanica), yucca, almond (Prunus dulcis), cashew (Anacardium occidentale), olive (Olea), avocado (Persea americana), shea (Butyrospermum parkii), cocoa bean (Theobroma cacao), argan (Argania spinosa), rice, their corresponding mid or high oleic varieties and any variety with increased level of unsaturated fatty acids compared to the original seed variety. Varieties may be obtained by natural selection or by genetic modification (GMO).

In another aspect of the invention, isolated oleosomes may also be obtained from cells other than plant cells. A system functionally equivalent to plant oleosomes is present in bacteria, yeast, algae and fungi. Oleosomes (lipid droplets) from these organisms, as well as those that may be discovered in other living cells by a person skilled in the art, may also be employed according to the process of the current invention for enlarging the isolated oleosomes.

In a particular aspect of the invention, the isolated oleosomes may be obtained from a vegetable source selected from the group consisting of rapeseed, soybean, cottonseed, coconut, brown linseed, yellow linseed, hazelnut, maize, sesame, almond, cashew, olive, avocado, shea, and sunflower, and their corresponding mid or high oleic varieties, and any variety with increased level of unsaturated fatty acids compared to the original variety. The isolated oleosomes may be obtained from a vegetable source selected from the group consisting of rapeseed and rapeseed varieties with increased level of unsaturated fatty acids compared to the original rapeseed, sunflower, mid and high oleic sunflower, soybean, coconut, brown linseed, yellow linseed and hazelnut. Finally, the isolated oleosomes may be obtained from a vegetable source selected from the group consisting of rapeseed, sunflower, mid and high oleic sunflower, soybean, brown linseed and yellow linseed.

The methods for obtaining isolated oleosomes are well known in the art. Typically, plants are grown and allowed to set seed using agricultural cultivation practices well known to a person skilled in the art. The seeds are harvested and, if desired, materials such as stones or seed hulls (de-hulling) may be removed from the seeds by, for example, sieving or rinsing. Subsequently the seeds are processed by mechanical pressing, grinding or crushing. A liquid phase, e.g. water, may also be added prior to grinding of the seeds, which is known as wet milling. Following grinding, a slurry is obtained and filtrated.

The filtrate may be subsequently separated by applying centrifugal acceleration which separates the filtrate into two liquid phases, a watery phase and an oily oleosome containing phase.

Alternatively, the slurry obtained after grinding may be submitted to a liquid-solid separation (two-phase separation) or a liquid-solid-liquid separation (three-phase separation) using a centrifugal decanter. Both separation techniques follow the same operating principle.

In one aspect of the invention, the isolated oleosomes may be washed prior to the step of subjecting the isolated oleosome to a high-shear mixing or a high-shear centrifugal force of the current process. The isolated oleosomes may be washed by re-suspending them in a floatation solution of lower density (e.g. water, aqueous buffer with neutral to alkaline pH up to 9.5) and by subsequently separating them again from the aqueous phases by means of centrifugation. The washing procedure may be repeated several times, from one up to three times.

During each washing step, the extrinsic proteins surrounding the oleosomes are further removed. It is found that one, up to three, washing steps prior to the step of subjecting the isolated oleosomes to a high-shear mixing or a high-shear centrifugal force, may result in a further enlargement of the average globule diameter of the oleosomes during that step of the current process.

In another aspect of the invention, the isolated oleosomes, optionally being washed as described before, may be subjected to a heat treatment prior to the step of subjecting the isolated oleosome to a high-shear mixing or a high-shear centrifugal force of the process for enlarging oleosomes. The heat treatment may be a pasteurization treatment or an ultra-high-temperature (UHT) treatment. Pasteurization treatment involves heating the oleosomes at a temperature of 65°C to 70°C for 30 minutes in batch, or 80°C to 85°C for 15 to 25 seconds in a continuous-flow process (High temperature short time Pasteurization (HTST pasteurization)). UHT treatment involves heating of oleosomes at a temperature of 135°C to 150°C in a continuous-flow process and holding at that temperature for one or more seconds, up to 5 seconds, before cooling rapidly to room temperature.

Without being bound by theory, a heat treatment of the isolated oleosomes may result in a denaturation of the extrinsic proteins surrounding the oleosomes. It is found that a heat treatment of the isolated oleosomes may result in a further enlargement of the average globule diameter of the oleosomes during the step of subjecting the isolated oleosome to a high-shear mixing or a high-shear centrifugal force of the process according to the invention.

The isolated oleosomes comprise proteins such as, but not limited to, "intrinsic proteins".

Said intrinsic proteins are mostly oleosin. Caleosin and stereolosin are minor intrinsic proteins. The oleosins contain a hydrophilic part, which is present at the isolated oleosomes' surface and a hydrophobic part which is anchored in the oil and ensures for oleosome stability. Even at alkaline conditions of pH 8 or higher, proteins remain strongly bound, whereas weakly bound proteins will be removed in alkaline conditions.

In one aspect of the invention the isolated oleosomes have a protein content in a range of from 0.2 to 6.0 weight%, from 0.3 to 5.5 weight%, or from 0.3 to 5.2 weight% expressed on dry weight of oleosomes. The content of the proteins is measured after washing oleosomes at pH 9.5. The actual applied method is described in the experimental section.

In another aspect of the invention the isolated oleosomes have a content of phospholipids in a range of from 0.2 to 6.0 weight%, from 0.3 to 5.5 weight%, from 0.4 to 5.0 weight% expressed on dry weight of the oleosomes.

In a further aspect of the invention the isolated oleosomes have a protein content in a range of from 0.2 to 6.0 weight%, from 0.3 to 5.5 weight%, or from 0.3 to 5.2 weight% expressed on dry weight of oleosomes and a phospholipids content in a range of from 0.2 to 6.0 weight%, from 0.3 to 5.5 weight%, from 0.4 to 5.0 weight% expressed on dry weight of the oleosomes. The content of the proteins is measured after washing the oleosomes at pH 9.5 (see method in experimental section).

In another aspect of the invention, the isolated oleosomes are not from an animal source.

### Obtaining an oleosome composition

In the process according to the invention, the isolated oleosomes are subjected to a high-shear mixing or a high-shear centrifugal force, and an oleosome composition is obtained.

High-shear mixing may be applied by means of different types of high-shear mixers. They can be static high-shear mixers or dynamic mixers, e.g. rotor-stator high-shear mixers.

A high-shear centrifugal force may be applied by means of different types of centrifuges such as disk-stack centrifuges.

High-shear mixing is commonly applied to reduce the size of the lipid globules in emulsions. Surprisingly it is found that by applying shear-mixing or high-shear centrifugal force to the isolated oleosomes it results in an oleosome composition wherein the oleosomes have an enlarged average globule diameter compared to the average globule diameter of the isolated oleosomes. Additionally, the particle size distribution of the oleosomes in the oleosome composition may be reduced. A more uniform globule diameter may be obtained.

In the current invention, the average globule diameter of the oleosomes is expressed as the D50-value (D50). The D50-value of oleosomes is the diameter below which 50% of the volume of oleosome particles lies, and it is expressed in micron (= micrometer, symbol: µm). D90-value of oleosomes is the diameter below which 90% of the volume of oleosome particles lies. D 10-value of oleosomes is the diameter below which 10% of the volume of oleosome particles lies.

To measure the average globule diameter (D50-value) of the oleosomes, the oleosomes are considered spherical and in case of non-spherical oleosomes, the diameter is considered as being the largest dimension that can be measured between two opposite points on the surface thereof.

To be able to measure the globule diameter of the oleosomes with a Mastersizer 3000 from Malvern, the oleosomes need to be diluted such that an obscuration in the range of from 8.0 to 8.5% is obtained. Obscuration within the Mastersizer is the amount of light blocked or scattered, by the particles. Therefore, the oleosomes are diluted in a buffer solution containing 10 mM sodium phosphate, pH 7.4, and 1.0 weight% sodium dodecyl sulphate (SDS). To give some guidance, about 0.2 wt% of oleosomes is diluted in the buffer solution and the dilution is further adjusted to obtain the aforementioned obscuration. Once this optimal obscuration is obtained, the globule diameter is measured and the average globule diameter (D50) can be calculated. The actual method applied in the current application is provided in detail in the section "examples: measurement of average globule size".

In one aspect of the invention, the high-shear mixing or a high-shear centrifugal force may be applied under such conditions that contact of the isolated oleosomes with oxygen is reduced. High-shear mixing or a high-shear centrifugal force may be applied in presence of nitrogen or under vacuum. This may further improve the oxidation stability of the obtained oleosome composition.

### High-shear mixing

The process according to the present invention comprises subjecting the isolated oleosomes to a high-shear mixing.

The high-shear mixing is applied by means of a rotor-stator high-shear mixer. Different types of high-shear rotor-stator mixers exist such as batch and in-line high-shear rotor-stator mixers.

A rotor-stator high-shear mixer is known to use a rotating impeller or high-speed rotor, or a series of such impellers or inline rotors, usually powered by an electric motor, to create flow and shear. A typical parameter to characterize the high shear mixing of rotor-stator high-shear mixers is the tip velocity. The tip velocity or circumferential speed is defined as the speed of the fluid at the outside diameter of the rotor and is expressed in meter per second (m/s). The tip velocity will be higher than the velocity at the centre of the rotor, and it is this velocity difference that creates shear. The tip velocity can be calculated for each rotor-stator high-shear mixer type based on the diameter of the rotor and its rotational speed. Furthermore, a stationary component may be used in combination with the rotor, and is referred to as the stator. The stator may create a close-clearance gap between the rotor and itself and forms an extremely high-shear zone for the material as it exits the rotor. The rotor and stator combined together are often referred to as the mixing head, or generator. A large high-shear rotor-stator mixer may contain a number of generators. Further design factors include the diameter of the rotor and its rotational speed, the distance between the rotor and the stator, the time in the mixer. Still further design factors may include the number of rows of teeth on the rotor, their angle, the width of the openings between the teeth and the number of impellers in the series.

The high-shear mixing is applied by means of a rotor-stator high-shear mixer at tip velocity in a range of from 1.6 to 12.8 m/s, in a range of from 1.9 to 11.2 m/s, from 2.6 to 9.6 m/s, from 3.2 to 8.0 m/s, from 3.5 to 8.5 m/s, from 4.5 to 7.5 m/s or of from 4.8 to 6.4 m/s.

The high-shear mixing of the process is applied at temperatures of from 4 to 50°C, from 10 to 35°C, or from 15 to 30°C.

In one aspect of the invention, the dry substance content of the isolated oleosomes is adjusted prior to the high-shear mixing to a range of from 30 to 80 weight%, from 40 to 70 weight%, or from 50 to 60 weight%.

D50 value may further increase with increasing tip velocity. Without being bound by any theory, a sigmoidal relationship between the average globule diameter (D50) and an increasing tip velocity may be observed when applying the rotor stator high-shear mixing for a certain period of time.

In another aspect of the invention, the high-shear mixing may be applied for a period of time of at least 2 minutes, at least 4 minutes, at least 5 minutes, or at least 7 minutes. The high-shear mixing may be applied for a period of time in a range of from 2 to 90 min, in a range of from 3 to 60 min, from 4 to 45 min.

Without being bound by theory, a linear or quasi linear increase of the average globule diameter (D50) of the oleosomes in the oleosome composition may be observed in function of the period during which the high-shear mixing is applied. This linear increase or quasi linear increase may end in an asymptotic function between time and average globule diameter of oleosomes in the oleosome composition whereby the average globule diameter may reach a maximum.

In a particular aspect of the invention, the high-shear mixing is applied by means of a high-shear mixer at a tip velocity in a range of from of 3.5 to 8.5 m/s for a period of time of at least 3 minutes. The process is applied by means of a high-shear mixer at a tip velocity in a range of from 4.5 to 7.5 m/s for a period of time of at least 4 minutes.

In one aspect of the invention is the high shear mixing is applied by means of an in-line static high-shear mixer.

The level of high-shear mixing obtained by an in-line static high-shear mixer may depend upon its design. The design of static mixers may consist of a series of baffles and/or orifices of different forms an sizes.

In yet another aspect of the invention, the pH of the isolated oleosomes that are subjected to the high-shear mixing is in a range of from 3.5 to 10.0, from pH 4.5 to 8.5, from pH 5.5 to 7.5. The pH of the isolated oleosomes may be adjusted according to needs using sodium hydroxide, sodium bicarbonate, hydrogen chloride, citric acid, lactic acid, acetic acid or aqueous buffer solutions and the like.

It is found that this pH range of isolated oleosomes may positively influence the further enlargement of the average globule diameter of the oleosomes during the high-shear mixing of the current process. The tip velocity and/or the time of high-shear mixing may be reduced when the isolated oleosomes are in the described pH range prior to being subjected to high-shear mixing and still a similar D50 value will be obtained.

The tip velocity and/or the time of high-shear mixing applied may be reduced when the isolated oleosomes are washed prior to being subjected to high-shear mixing and still a similar D50 value will be obtained.

The tip velocity and/or the time of high-shear mixing applied may be reduced when the isolated oleosomes are heat treated prior to being subjected to high-shear mixing and still a similar D50 value will be obtained.

### High-shear centrifugal force

Alternatively, the process according to the present invention comprises subjecting the isolated oleosomes to a high-shear centrifugal force.

The high-shear centrifugal force is applied by means of a disk-stack centrifuge.

Disk-stack centrifuges are the most common industrial centrifuges. The disc-stack bowl incorporates a large number of conical discs, with a suitable wall thickness to provide sufficient rigidity, spaced at intervals. Each space between adjacent discs forms an individual centrifugation zone. Disk-stack centrifuges can run at high rotational speed resulting in extremely strong acceleration. The very high g-force that is created may also result in a shear force, i.e. a high-shear centrifugal force.

The high-shear centrifugal force of the process is applied by means of a disk-stack centrifuge at a rotational speed in a range of from 15000 g to 20000 g, from 16000 g to 19000 g, from 17000 g to 18000 g.

In one aspect of the invention, the high-shear centrifugal force of the process is applied to isolated oleosomes that have a protein content in a range of from 0.2 to 3.0 weight%, from 0.3 to 2.5 weight%, or from 0.3 to 2.0 weight% expressed on dry weight of the oleosomes. This may be obtained by subjecting the isolated oleosomes to a washing step by re-suspending them in a floatation solution of lower density (e.g. water, aqueous buffer) with an alkaline pH of above pH 10.0, above pH 11.0, above pH 12.0, and by subsequently separating them again from the aqueous phases by means of centrifugation. The washing procedure may be repeated several times, from one up to three times. The content of the proteins is measured after washing the oleosomes at pH 9.5.

In another aspect of the invention, the high-shear centrifugal force of the process may be applied for a period of at least 20 seconds, at least 30 seconds, at least 40 seconds, or at least 50 seconds. The high-shear centrifugal force may be applied for a period in a range of from 20 to 120 seconds, from 30 to 100 seconds, or from 40 to 80 seconds.

In one more aspect of the invention, the high-shear centrifugal force of the process may be applied at a temperature of from 20 to 50°C, from 30 to 45°C, from 35 to 40°C. It is found that performing the high-shear centrifugal force at this temperature range may positively influence the further enlargement of the average globule diameter of the isolated oleosomes.

In a further aspect of the invention, the dry substance content of the isolated oleosomes prior to being subjected to the high-shear centrifugal force is adjusted to a range of from 5 to 30 weight%, from 10 to 25 weight%, or from 15 to 20 weight%.

In a particular aspect of the invention, the high-shear centrifugal force of the process is applied by means of a disk-stack centrifuge at a rotational speed in a range of from 16000 g to 18000 g for a period of time of at least 30 seconds, and at a temperature in a range of from 30 to 45°C, and whereby the isolated oleosomes that are subjected to the high-shear centrifugal force have a protein content in a range of from 0.3 to 2.0 weight% expressed on dry weight of the oleosomes. The content of the proteins is measured after washing the oleosomes at pH 9.5.

### Further treatment of the oleosome composition

In another aspect of the invention the oleosome composition obtained from subjecting the isolated oleosomes to the high-shear mixing or the high shear centrifugal force of the process may be further subjected to a heat treatment step. The heat treatment may be a pasteurization treatment or an ultra-high-temperature (UHT) treatment. Pasteurization treatment involves heating the oleosome composition at a temperature of 65 to 70°C for 30 minutes in batch or 80°C to 85°C for 15 to 25 seconds in a continuous-flow process (High temperature short time Pasteurization (HTST Pasteurization)). UHT treatment involves heating of oleosome composition at a temperature of 135°C to 150°C in a continuous-flow process and holding at that temperature for one or more seconds, up to 5 seconds, before cooling rapidly to room temperature.

The heat treatment step of the oleosome composition is applied to further avoid microbial contamination of the oleosomes. It has been found that the oleosomes in the oleosome composition maintain their average globule diameter when being subjected to such a heat treatment step. Therefore, the oleosome composition may be preserved for a longer period without addition of any preservatives.

In yet another aspect of the invention the oleosome composition may be further subjected to a dehydration step. Dehydration steps well known to the person skilled in the art are amongst others spray drying, fluid bed drying, freeze drying or vacuum drying. The thus obtained oleosomes are in a more concentrated liquid form or in a powder form. In one aspect of the invention, the dehydration step is a spray-drying step.

It has been found that the oleosomes in the oleosome composition maintain their average globule diameter when being subjected to a spray drying step. Spray-drying allows for a convenient packaging of the oleosome composition and storage at room temperature. It also facilitates the dosing of oleosome composition as ingredients in the preparation of further products.

In one aspect of the invention the process for enlarging oleosomes comprises the steps of:
i) Providing isolated oleosomes from a vegetable source with a dry substance in a range of 30 to 80 weight%, from 40 to 70 weight%, or from 50 to 60 weight%, and
ii) Washing the isolated oleosomes one up to three times, and
iii) Optionally heat treating the washed oleosomes, and
iv) Subjecting the oleosomes from step ii) or step iii) to a high-shear mixing by means of a rotor-stator high-shear mixer with a tip velocity in a range of from 1.6 to 12.8 m/s, in a range of from 1.9 to 11.2 m/s, from 2.6 to 9.6 m/s, from 3.2 to 8.0 m/s, from 3.5 to 8.5 m/s, from 4.5 to 7.5 m/s or of from 4.8 to 6.4 m/s, and obtaining an oleosome composition,
v) Optionally heat treating the oleosome composition from step iv), and
vi) Optionally dehydrating the oleosome composition from step iv) or step v).

In a specific aspect of the invention the process for enlarging oleosomes comprises the steps of:
i) Providing isolated oleosomes from a vegetable source with a dry substance in a range of 30 to 80 weight%, from 40 to 70 weight%, or from 50 to 60 weight%, and
ii) Washing the isolated oleosomes one up to three times and adjusting the pH of the washed oleosome to a pH in a range of from 4.5 to 8.5, from pH 5.5 to 7.5, and
iii) Heat treating the oleosomes obtained from step ii) by means of UHT treatment, and
iv) Subjecting the oleosomes from step iii) to a high-shear mixing by means of a rotor-stator high-shear mixer with a tip velocity in a range of from 1.6 to 12.8 m/s, in a range of from 1.9 to 11.2 m/s, from 2.6 to 9.6 m/s, from 3.2 to 8.0 m/s, from 3.5 to 8.5 m/s, from 4.5 to 7.5 m/s or of from 4.8 to 6.4 m/s, for a period of time in a range of from 2 to 90 min, in a range of from 3 to 60 min, from 4 to 45 min, and obtaining an oleosome composition, and
v) Heat treating the oleosome composition from step iv).

This specific aspect of the invention allows obtaining the oleosome composition in liquid form.

In yet another specific aspect of the invention the process for enlarging oleosomes comprises the steps of:
i) Providing isolated oleosomes sourced from a vegetable source and with a dry substance in a range of 30 to 80 weight%, from 40 to 70 weight%, or from 50 to 60 weight%, and
ii) Washing the oleosomes one up to three times, and adjusting the pH of the washed oleosome to a pH in a range of from 4.5 to 8.5, from pH 5.5 to 7.5, and
iii) Heat treating the oleosomes obtained from step ii) by means of UHT treatment, and
iv) Subjecting the oleosomes from step iii) to a high-shear mixing by means of a rotor-stator high-shear mixer with a tip velocity in a range of from 1.6 to 12.8 m/s, in a range of from 1.9 to 11.2 m/s, from 2.6 to 9.6 m/s, from 3.2 to 8.0 m/s, from 3.5 to 8.5 m/s, from 4.5 to 7.5 m/s or of from 4.8 to 6.4 m/s, for a period of time in a range of from 2 to 90 min, in a range of from 3 to 60 min, from 4 to 45 min, and obtaining an oleosome composition,
v) Heat treating the oleosome composition from step iv) by means of UHT treatment, and
vi) Spray-drying the oleosome composition from step v).

This specific aspect of the invention allows obtaining the oleosome composition in powder form.

In another aspect of the invention the process for enlarging oleosomes comprises the steps of:
i) Providing isolated oleosomes from a vegetable source with a protein content in a range of from 0.2 to 3.0, from 0.3 to 2.5 weight%, or from 0.3 to 2.0 weight% expressed on dry weight of the oleosomes, and
ii) Optionally heat treating the isolated oleosomes, and
iii) Subjecting the oleosomes from step i) or step ii) to a high-shear centrifugal force by means of a disk-stack centrifuge at a rotational speed in a range of from 15000g to 20000g, from 16000 g to 19000 g or from 17000 g to 18000 g,
iv) Optionally heat treating the oleosome composition from step iii), and
v) Optionally dehydrating the oleosome composition from step iii) or step iv).

In another specific aspect of the invention the process for enlarging oleosomes comprises the steps of:
i) Providing isolated oleosomes from a vegetable source with a protein content in a range of from 0.2 to 3.0, from 0.3 to 2.5 weight%, or from 0.3 to 2.0 weight% expressed on dry weight of the oleosomes, and
ii) Subjecting the oleosomes from step i) to a high-shear centrifugal force by means of a disk-stack centrifuge at a rotational speed in a range of from 15000 g to 20000 g, from 16000 g to 19000 g or from 17000 g to 18000 g, for a period of time in a range of from 20 to 120 seconds, from 30 to 100 seconds, or from 40 to 80 seconds, and obtaining an oleosome composition, and
iii) Heat treating the oleosome composition from step ii).

This specific aspect of the invention allows obtaining the oleosome composition in liquid form.

In yet another specific aspect of the invention the process for enlarging oleosomes comprises the steps of:
i) Providing isolated oleosomes sourced from a vegetable source with a protein content in an amount of from 0.2 to 3.0, from 0.3 to 2.5 weight%, or from 0.3 to 2.0 weight% expressed on dry weight of the oleosomes, and
ii) Subjecting the oleosomes from step i) to a high-shear centrifugal force by means of a disk-stack centrifuge at a rotational speed in a range of from 15000 g to 20000 g, from 16000 g to 19000 g or from 17000 g to 18000 g, for a period of time in a range of from 20 to 120 seconds, from 30 to 100 seconds, or from 40 to 80 seconds, and obtaining an oleosome composition, and
iii) Heat treating the oleosome composition from step ii) by means of UHT treatment, and
iv) Spray-drying the oleosome composition from step iii).

This specific aspect of the invention allows obtaining the oleosome composition in powder form.

The process according to the current invention allows to increase the average globule diameter of the isolated oleosomes with at least 30%, at least 40%, at least 50%, at least 60%, at least 70%, at least 80%, at least 90%, or at least 100%. Furthermore, the oleosomes in the oleosome compositions have an average globule diameter that is up to 2 times, up to 3 times, up to 4 times, up to 5 times, up to 7 times, up to 10 times, even up to 20 times the average globule diameter of the corresponding isolated oleosomes.

### The oleosome composition of the present invention

The invention further relates to an oleosome composition that is originating from a vegetable source selected from the group consisting of rapeseed, sunflower, high oleic sunflower, soybean, brown linseed and yellow linseed, as defined in the claims.

The isolated oleosomes in the oleosome composition from soybean have an average globule diameter of at least 0.74 micron. The isolated oleosomes in the oleosome composition from rapeseed have an average globule diameter of at least 0.8 micron. The isolated oleosomes in the oleosome composition from brown linseed have an average globule diameter of at least 1.4 micron. Furthermore, the oleosomes in the in the oleosome composition from high oleic sunflower have an average globule diameter of at least 1.4 micron. The isolated oleosomes in the oleosome composition from yellow linseed have an average globule diameter of at least 3.2 micron. Finally, the isolated oleosomes in the oleosome composition from sunflower have an average globule diameter of at least 5.6 micron.

The isolated oleosomes in the oleosome composition from sunflower have an average globule diameter of at least 5.7, micron, at least 5.8 micron, at least 5.9 micron, at least 6.0 micron, at least 6.5 micron, or at least 7.0 micron. The average globule diameter of the isolated sunflower oleosomes in the oleosome composition is up to 8.0 micron, up to 10.0 micron, or up to 12.0 micron.

Further, the isolated oleosomes in the oleosome composition from high oleic sunflower have an average globule diameter of at least 1.6 micron, at least 1.8 micron, at least 2.0 micron, or at least 2.2 micron. The average globule diameter is in up to 4.0 micron, or up to 6.0 micron, up to 8.0 micron, up to 10.0 micron, or even up to 12.0 micron.

Furthermore, the isolated oleosomes in the oleosome composition from rapeseed have an average globule diameter of at least 0.9 micron, at least 1.0 micron, or at least 1.2 micron, at least 1.5 micron, or at least 2.0 micron. The average globule diameter is in up to 2.5 micron, up to 3.5 micron, or up to 4.0 micron, up to 6.0 micron, up to 8.0 micron, or even up to 10.0 micron.

Additionally, the isolated oleosomes in the oleosome composition from soybean have an average globule diameter of at least 0.5 micron, at least 0.6 micron, or at least 0.7 micron. The average globule diameter is up to 1.5 micron, up to 2.0 micron, up to 4.0 micron, up to 5.0 micron, or even up to 6.0 micron.

Further, the isolated oleosomes in the oleosome composition from brown linseed have an average globule diameter of at least 1.5 micron, at least 1.6 micron, or at least 1.7 micron, at least 1.8 micron at least 2.0 micron. The average globule diameter is up to 3.0 micron, up to 4.5 micron, up to 6.0 micron, up to 8.0 micron, or even up to 10.0 micron.

Finally, the isolated oleosome composition from yellow linseed has an average globule diameter of at least 3.3 micron, at least 3.5 micron, at least 4.0 micron, or at least 5.0 micron. The average globule diameter is up to 7.0 micron, up to 8.0 micron, up to 9.0 micron, up to 10.0 micron, or up to 12.0 micron.

Whereas lipid globules in an oil-in-water emulsions are becoming more unstable with an increased lipid globule diameter, it was found that the oleosome compositions according to the present invention remain stable. No emulsifier ingredients need to be added to the oleosome compositions to maintain their stability.

The stability of the oleosome composition may be observed by the D10, D50 and/or D90 value of the oleosome composition that remains practically constant over time.

In one aspect of the invention the oleosome composition may be obtained by the process according to the invention.

### Products comprising the oleosome composition

The invention also relates to food and feed products, pharmaceutical products, personal care products, nutritional compositions and industrial products comprising the oleosome composition according to the invention.

Examples of such food and feed products include but are not limited to drinks such as coffee, black tea, powdered green tea, cocoa, juice etc.; milk component-containing drinks, such as raw milk, processed milk, lactic acid beverages, etc.; a variety of drinks including nutrition-enriched drinks, such as calcium-fortified drinks and the like and dietary fiber-containing drinks, etc.; dairy products, such as butter, cheese, vegan cheese, yoghurt, coffee whitener, whipping cream, custard cream, custard pudding, etc.; iced products such as ice cream, soft cream, lacto-ice, ice milk, sherbet, frozen yogurt, etc.; processed fat food products, such as mayonnaise, margarine, spread, shortening, etc.; soups; stews; seasonings such as sauce, dressings, etc.; a variety of paste condiments represented by kneaded mustard; a variety of fillings typified by jam and flour paste; a variety or gel or paste-like food products including red bean-jam, jelly, and foods for swallowing impaired people; food products containing cereals as the main component, such as bread, noodles, pasta, pizza pie, corn flake, etc.; Japanese, US and European cakes, candy, cookie, biscuit, hot cake, chocolate, rice cake, etc.; kneaded marine products represented by a boiled fish cake, a fish cake, etc.; live-stock products represented by ham, sausage, hamburger steak, etc.; daily dishes such as cream croquette, paste for Chinese foods, gratin, dumpling, etc.; foods of delicate flavor, such as salted fish guts, a vegetable pickled in sake lee, etc.; liquid diets such as tube feeding liquid food, etc.; supplements; and pet foods.

Whereas traditional processes for preparing food and feed products will require an emulsification or homogenization step, the process of the current invention for preparing the food and feed products does not need such a homogenisation or emulsification step. A simple blending of the oleosome composition with the other ingredients is sufficient.

Pharmaceutical products according to the invention may be formulated to include therapeutic agents, diagnostic agents and delivery agents. As a therapeutic or diagnostic agent, the product will additionally contain an active ingredient. The active ingredient can be anything that one wishes to deliver to a host. The active ingredient may be a protein or peptide that has therapeutic or diagnostic value. Such peptides include antigens (for vaccine formulations), antibodies, cytokines, blood clotting factors and growth hormones. An example of pharmaceutical product is a parenteral emulsion containing the oleosome composition and a drug.

Personal care products according to the invention include soaps, cosmetics, skin creams, facial creams, toothpaste, lipstick, perfumes, make-up, foundation, blusher, mascara, eyeshadow, sunscreen lotions, hair conditioner, and hair coloring.

Industrial products according to the invention include paints, coatings, lubricants, films, gels, drilling fluids, paper sizing, latex, building and road construction material, inks, dyes, waxes, polishes and agrochemical formulations.

Nutritional compositions according to the invention may be compositions that are developed to cover the nutritional needs, either as a supplement, or as a complete nutrition. The people that are targeted for the nutritional composition according to the invention relate to specific groups of people, such as, but not limited to, preterm infants, infants, toddlers, invalids, elderly people, athletes or humans having nutritional deficiencies and/or having a deficient immune system. They may be designed for people suffering a more specific disease state such as cancer, chronic obstructive pulmonary disease, and later-stage kidney disease and others. Amongst others, nutritional compositions may be helpful for people who struggle with a loss of appetite, have difficulty chewing, have trouble preparing balanced meals, and/or are recovering from surgery or an illness. In the event that the nutritional composition is meant for a complete nutrition, it can provide a healthy balance of protein, carbohydrate, and/or fat.

These nutritional compositions can be in the form of liquid, as a ready-to-drink formula or used in feeding tubes. It can also be in the form of a formula base i.e. a powder or a concentrated liquid, to be dissolved in water or in another fluid for the preparation of a ready-to-drink nutritional composition. The nutritional composition may also be in the form of a pudding or a jelly, or in form a cookie or a snack bar, or in any other form.

In one aspect of the invention the nutritional composition is comprising the oleosome composition in an amount of from 1 to 70w% on dry matter of the nutritional composition and at least one nutritional ingredient other than oleosomes. The nutritional composition is comprising at least one nutritional ingredient other than oleosomes and oleosome composition in an amount of from 5 to 65 weight%, from 10 to 60 weight %, from 15 to 55 weight %, from 20 to 50 weight %,or from 25 to 45 weight % on dry matter of the nutritional composition. The at least one nutritional ingredient other than oleosomes may be, but is not limited to proteins, carbohydrates, fats, vitamins, minerals, trace elements, essential amino acids, essential fatty acids, and mixtures of two or more thereof.

In another aspect of the invention the nutritional composition further comprises at least one non-nutritional ingredients.

Non-nutritional ingredients according to the invention are ingredients that do not substantially add to the caloric intake and/or do not substantially provide micronutrients. Examples of non-nutritional ingredients are flavors, colorants, emulsifiers, acid regulators such as citric acid or lactic acid, preservatives, and the like. The non-nutritional ingredients may be from a natural or synthetic origin.

In yet another aspect of the invention, the at least one nutritional ingredient other than oleosomes is not an emulsifier.

In one specific aspect the nutritional composition according to the invention comprising oleosome composition is an infant food product.

Infant food product is a term well-known in the art and it refers to food that is specifically manufactured for infants and it may be characterized in that is soft, and easily consumable by infants and has a nutritional composition adapted to the specific needs at each growth stage.

The infant food product according to the invention may be in the form of a liquid, as a ready-to-drink infant food product. It can also be in the form of a formula base, i.e. a powder or a concentrated liquid, to be dissolved in water or in another fluid for the preparation of a ready-to-drink infant food product. The infant food product may also be in the form of a pudding or a jelly, or in the form of a cookie or a snack bar, or in any other form.

The infant food product of the present invention is encompassing the three forms available on the market, i.e. powder, infant base powder, liquid concentrate, and ready-to-feed liquids

It may be a first age infant formula, for infants from birth to age of 6 months, a follow-on formula (also called second age infant formula), for infants from an age of 6 to 18 months, or a growing-up formula (also called third age infant formula) for infants from an age from 1 to 3 years

In a specific aspect of the invention, the infant formula is a follow-on formula or growing-up formula.

Finally the current invention relates to a process for preparing the nutritional composition according to the invention comprising the oleosome composition, and the process is comprising the step of blending the oleosome composition with the at least one other nutritional ingredient other than oleosomes. The process is not comprising a further step of emulsification of the oleosome composition with the at least on other nutritional composition.

In one aspect of the invention the process for preparing the nutritional composition is comprising the steps of:
a) Taking the oleosome composition according to the present invention, and
b) Blending the oleosomes with the at least one other nutritional ingredient other than oleosomes,
and wherein process is not comprising a further step of emulsification of the oleosome composition with the at least on other nutritional composition

In one aspect of the invention, the process for preparing the nutritional composition according to the invention may also comprise a further step of spray-drying following the blending of the oleosome composition with the at least one other nutritional ingredient other than oleosomes.

Whereas traditional processes for preparing nutritional compositions may require an emulsification step, the process of the current invention for preparing the nutritional composition does not need such an emulsification step. A simple blending of the oleosome composition with the other nutritional ingredients is sufficient.

The current invention relates to the use of a rotor-stator high-shear mixer and/or a disk-stack centrifuge for enlarging the average globule diameter of oleosomes in an oleosome composition.

It relates to the use wherein the rotor-stator high-shear mixer has a tip velocity in a range of from 1.6 to 12.8 m/s, in a range of from 1.9 to 11.2 m/s, from 2.6 to 9.6 m/s, from 3.2 to 8.0 m/s, from 3.5 to 8.5 m/s, from 4.5 to 7.5 m/s or of from 4.8 to 6.4 m/s.

It further relates to the use wherein the disk-stack centrifuge has a rotational speed in a range of from 15000 g to 20000 g, from 16000 g to 19000 g or from 17000 g to 18000 g.

It further relates to the use wherein the average globule diameter of the oleosomes in oleosome composition is increased with at least 30%, at least 40%, at least 50%, at least 60%, at least 70%, at least 80%, at least 90%, or at least 100%, up to 2 times, up to 3 times, up to 4 times, up to 5 times, up to 7 times, up to 10 times, even up to 20 times the average globule diameter of the corresponding isolated oleosomes.

### EXAMPLES

### Measurement of average globule size

The oleosomes were re-dispersed or diluted in a buffer solution containing 10 mM sodium phosphate, pH 7.4, and 1.0 % sodium dodecyl sulphate (SDS). The average globules size, expressed as the D50 value, was measured using a Malvern Mastersizer 3000 equipped with a Hydro module. The concentration of the oleosomes in the buffer is such that an obscuration in the range of 8 to 8.5% in the Mastersizer equipment was obtained. A refractive index of 1.47 was used to measure the oleosomes size.

### Measurement of the protein content

After the first centrifugation step of the isolation procedure of oleosomes (see below: part: isolation of oleosomes, first centrifugation step), sucrose (20% w/w) was added to the hydrophobic, oleosome containing phase and the pH was adjusted to pH 9.5. The mixture was centrifuged again (15000g, 48°C, 3 h). This sequence of steps was repeated once more to remove any residual proteins that are weakly attached to the oleosomes. Finally, the washed oleosomes were dispersed in phosphate-buffered saline (PBS).

Prior to analysis of proteins, the dry weight of the purified oleosomes was determined using a precision moisture balance HR83 (Mettler Toledo, Geissen,Germany)

The protein content of the oleosomes was determined by the amount of Nitrogen in the sample. This amount of Nitrogen was analyzed using a combustion method. Combustion of the sample was performed at 1100 °C. The amount of Nitrogen was determined using a conductivity detector (LECO TruMAc). The protein content was calculated by multiplying the amount of Nitrogen analyzed by 6.2

The content of proteins is expressed in weight% per dry weight of oleosomes washed at pH 9.5.

### Example 1 - Oleosome composition from sunflower

### Isolation of oleosomes

100 g of dehulled seeds from sunflower were soaked during 2 h in de-ionized water (ratio 1:3 seeds:water) at 20°C. The soaking water was discarded, and the soaked seeds were washed with de-ionized water (ratio 1:2 seed: demi-water). The washed seeds were grinded together with de-ionized water in a weight ratio of 1:10 of seeds/water. A Thermomix^{®} TM5 (Vorwerk) was used for grinding at a speed of 10700 rpm for 90 sec. The obtained slurry of seeds and water was subsequently filtered over a nylon filter with a pore diameter of 80 µm. The pH of the obtained filtrate was adjusted to 7.5 with sodium hydroxide solution.

This filtrate was centrifuged for 30 minutes at 5000 rpm (4950 x g, Thermo Scientific Sorvall Legend) to create a top layer. The centrifugation process separates the liquid phase further into two liquid phases: a hydrophilic phase (supernatant) which was a watery solution of proteins, carbohydrates and soluble fibers and a hydrophobic phase (creamy top layer) which contained the desired oleosomes. In addition to the two liquid phases, a solid pellet that contained cell debris and insoluble proteins was obtained

This was the first centrifugation step.

The creamy top layer (oleosomes) was re-diluted with de-ionized water, brought to pH 9.5 and centrifuged for 30 minutes at 5000 rpm (Thermo Scientific Sorvall Legend). The thus washed oleosomes (creamy top layer) were collected.

The amount of proteins of the isolated sunflower oleosomes was 2.12 weight % on dry weight of oleosomes, using the previous described method.

The average globule size of the isolated sunflower oleosomes is displayed in Table 1.

### Enlarging these sunflower oleosomes by means of high-shear mixing

### Example 1.1

The pH of the isolated sunflower oleosomes was adjusted to pH 4 and the dry matter was adjusted to 48%.

The isolated sunflower oleosomes were subjected to a high-shear mixing using an Ultra Turrax (IKA; suitable for a sample volume of 1 to 50 ml). The Ultra Turrax had a rotor diameter of 6.1 mm, a stator diameter of 8 mm, a gap size of 0.25 mm and was equipped with a probe S25N - 8G.

The average globule size of the sunflower oleosome composition is shown in table 1.

### Example 1.2

Example 1.1 was repeated, except that pH of the isolated sunflower oleosomes was adjusted to 6.7 (dry matter was also adjusted to 48%). The tip velocity of the high-shear mixing was 5.6 m/s for 15 minutes.

The average globule size of the sunflower oleosome composition is shown in table 1.

### Example 1.3

pH of the isolated sunflower oleosomes was adjusted to 6.7 (dry matter was also adjusted to 48%).

The isolated sunflower oleosomes were subjected to a high-shear mixing using an MaxxD Lab (Fryma Koruma; suitable for a sample volume of 3 to 12 liter). The tip velocity of the high-shear mixing was 9.7 m/s for 6 minutes.

The average globule size of the sunflower oleosome composition is shown in table 1.

**Table 1. Average globule size of isolated oleosomes and oleosome compositions from sunflower.**

| | Isolated oleosomes | Sunflower Oleosome composition | | |
|---|---|---|---|---|
| | | Example 1.1 | Example 1.2 | Example 1.3 |
| pH | - | 4.0 | 6.7 | 6.7 |
| D50 | 1.95 micron | 3.63 micron | 6.19 micron | 8.5 micron |

A significant enlargement of the oleosomes in the oleosome compositions was obtained in each of the examples.

### Example 2 - Oleosome composition from soybean

### Isolation of oleosomes

100 g of non-dehulled seeds from soybean were soaked during 2 h in de-ionized water (ratio 1:3 seeds:water) at 20°C. The soaking water was discarded, and the soaked seeds were washed with de-ionized water (ratio 1:2 seed: demi-water). The washed seeds were grinded together with de-ionized water in a weight ratio of 1:10 of seeds/water. A Thermomix^{®} TM5 (Vorwerk) was used for grinding at a speed of 10700 rpm for 90 sec. The obtained slurry of seeds and water was subsequently filtered over a nylon filter with a pore diameter of 80 µm. The pH of the obtained filtrate was adjusted to 7,5 with sodium hydroxide solution.

The filtrate was centrifuged for 30 minutes at 10000 rpm (Thermo Scientific Sorvall Legend). This was the first centrifugation step.

The centrifugation process separates the liquid phase further into two liquid phases: a hydrophilic phase (supernatant) which was a watery solution of proteins, carbohydrates and soluble fibers and a hydrophobic phase (creamy top layer) which contained the desired oleosomes. In addition to the two liquid phases, a solid pellet that contained cell debris and insoluble proteins was obtained.

The creamy top layer (oleosomes) was re-diluted with de-ionized water, brought to pH 9.5 and centrifuged for 30 minutes 10000 rpm (Thermo Scientific Sorvall Legend). The thus washed oleosomes (creamy top layer) were collected.

The isolated soybean oleosomes were UHT treated.

The amount of proteins of the isolated soybean oleosomes was 8.40 weight % on dry weight of the oleosomes, using the previously described method.

The average globule size is shown in Table 2

### Enlarging the soybean oleosomes by means of high-shear mixing

The isolated soybean oleosomes were adjusted to a pH of 6.7 and a dry substance of 42%. The isolated soybean oleosomes were subjected to a high-shear mixing using an Ultra Turrax (IKA, suitable for a sample volume of 1 to 50 ml). The Ultra Turrax had a rotor diameter of 6.1 mm, a stator diameter of 8 mm, a gap size of 0.25 mm and was equipped with a probe S25N - 8G. The high-shear mixing was performed during 90 minutes at a rotational speed of 24000 rpm (corresponding to a tip velocity of 7.67 m/s). A soybean oleosome composition was obtained.

The average globule size of the soybean oleosome composition is shown in table 2.

**Table 2. Average globule size of isolated oleosomes and oleosome compositions from soybean.**

| | Isolated oleosomes | Oleosome composition |
|---|---|---|
| D50 | 0.39 micron | 2.41 micron |

A significant enlargement of the oleosomes in the oleosome composition is obtained.

### Example 3 - Oleosome composition from rapeseed

### Isolation of oleosomes from rapeseed

Hulled rapeseeds were soaked overnight in de-ionized water (ratio 1:3 seeds: water) at 4-7 °C.

The soaking water was discarded, and the soaked seeds were washed with de-ionized water. (ratio 1:2 seed: demi-water). The soaked seeds together with de-ionized water in a weight ratio of 1:10 of seeds/water were wet milled in a Fryma Koruma toothed colloid mill. The slurry produced after the milling is adjusted to pH 9.5 and separated in a Flottweg tricanter Z2E unit (decanter mode, flow 240 L/h, bowl speed 5731 rpm, differential speed 6.4 rpm). A solid phase and a liquid phase containing the rapeseed oleosomes was obtained.

The liquid phase was adjusted to pH 12 and heated to a temperature of 40-45 °C.

The liquid phase was subsequently subjected to a centrifugation step in a GEA Westfalia Easyscale 10S disk centrifuge (bowl speed 17000 g, flow 100 L/h, 72 s retention time). A watery phase and an oily phase, i.e. the oleosome composition of the first centrifugation step were obtained. The amount of proteins of the isolated rapeseed oleosomes in the oily phase was 3.81 weight % expressed on dry weight of the oleosomes.

The average globule size of the isolated oleosomes was measured and is shown in Table 3.

### Enlarging the isolated oleosomes by means of high-shear centrifugal force:

### Example 3.1

The isolated rapeseed oleosomes were subjected to a second washing step. The amount of proteins of the washed rapeseed oleosomes in the oily phase was 1.97 weight % expressed. The washed oleosomes were diluted in an alkaline solution at pH 12 to obtain a liquid phase with a dry substance of 10%. The liquid phase was heated to a temperature of 40-45 °C and subsequently subjected to a centrifugation step in a GEA Westfalia Easyscale 10S disk centrifuge (bowl speed 17000 g, flow 180 L/h, 40 s retention time). A watery phase and an oily phase, i.e. the oleosome composition, were obtained.

The average globule size of the oleosomes composition was measured and is shown in Table 3.

### Example 3.2

The oleosome composition obtained in example 3.1 was subjected to a third washing step. The amount of proteins of the washed rapeseed oleosomes was 1.52 weight % expressed on dry weight of the oleosomes. The washed oleosomes were diluted in an alkaline solution at pH 12 to obtain a liquid phase with a dry substance of 10%. The liquid phase was heated to a temperature of 40-45°C and subsequently subjected to a centrifugation step in a GEA Westfalia Easyscale 10S disk centrifuge (bowl speed 17000 g, flow 180 L/h, 40 s retention time)

A watery phase and an oily phase, i.e. the oleosome composition, were obtained.

The average globule size of the oleosomes was measured and is shown in Table 3.

**Table 3. Average globule size of isolated oleosomes and oleosome compositions from rapeseed**

| | Isolated oleosomes | Oleosome composition | |
|---|---|---|---|
| | | Example 3.1 | Example 3.2 |
| Protein content | 3.81 w% | 1.97 w% | 1.52 w% |
| D50 | 0.66 micron | 1.01 micron | 1.40 micron |

It is noted that every subsequent centrifugation step is increasing the average globule size.

## Claims

1. A process for enlarging oleosomes and the process comprises subjecting the isolated oleosomes to a high-shear mixing and/or a high-shear centrifugal force, and obtaining an oleosome composition, wherein the high-shear mixing is applied by means of a rotor-stator high-shear mixer at a tip velocity in a range of from 1.6 to 12.8 m/s, or wherein the high-shear centrifugal force is applied by means of a disk-stack centrifuge at a rotational speed in a range of from 15000 g to 20000 g.

2. The process according to claim 1, wherein the oleosome composition is further subjected to a heat treatment step.

3. The process according to claim 1 or claim 2, wherein the oleosome composition is further subjected to a dehydration step.

4. The process according to any one of the preceding claims, wherein the high-shear mixing is applied to isolated oleosomes that are at a **pH** in a range of from 3.5 to 10.0 and/or that have a dry matter content in a range of from 30 to 80 weight% of the isolated oleosomes.

5. The process according to any one of the preceding claims, and wherein the high-shear mixing is applied for a period of time in a range of from 2 to 90 min.

6. The process according to claim 1, wherein the high-shear centrifugal force is applied to isolated oleosomes that have a protein content in a range of from 0.2 to 3.0 weight%.

7. The process according to claim 1 and claim 6, wherein the high-shear centrifugal force is applied for a period of time of from 20 to 120 seconds.

8. An oleosome composition that is originating from a vegetable source selected from the group consisting of rapeseed, soybean, sunflower, high-oleic sunflower, brown linseed and yellow linseed, and wherein
- the isolated oleosome composition from rapeseed has an average globule diameter of at least 0.8 micron, or
- the isolated oleosome composition from soybean has an average globule diameter of at least 0.7 micron, or
- the isolated oleosome composition from sunflower has an average globule diameter of at least 5.6 micron, or
- the isolated oleosome composition from high oleic sunflower has an average globule diameter of at least 1.4 micron, or
- the isolated oleosome composition from brown linseed has an average globule diameter of at least 1.4 micron, or
- the isolated oleosome composition from yellow linseed has an average globule diameter of at least 3.2 micron.

9. Food and feed products, pharmaceutical products, personal care products, nutritional compositions and industrial products comprising the oleosome composition according to claim 8.

10. The nutritional composition according to claim 9 and the nutritional composition is comprising the oleosome composition in a range of from 1 to 70w% on dry matter of the nutritional composition and at least one nutritional ingredient other than oleosomes.

11. A process for preparing the nutritional composition according to claim 10, and the process is comprising the steps of blending the oleosome composition according to claim 8 with the at least one other nutritional ingredient other than oleosomes, and wherein process is not comprising a further step of emulsification of the oleosome composition with the at least one other nutritional composition.

12. The process according to claim 11 wherein the process is comprising a step of dehydration prior and/or after blending.

13. Use of rotor-stator high-shear mixer and/or a disk-stack centrifuge for enlarging the average globule diameter of oleosomes in an oleosome composition, wherein the high-shear mixing is applied by means of a rotor-stator high-shear mixer at a tip velocity in a range of from 1.6 to 12.8 m/s, or wherein the high-shear centrifugal force is applied by means of a disk-stack centrifuge at a rotational speed in a range of from 15000 g to 20000 g.

## Patentansprüche

1. Verfahren zum Vergrößern von Oleosomen und wobei das Verfahren ein Unterziehen der isolierten Oleosomen einer Hochschermischung und/oder einer Hochscherzentrifugalkraft und ein Erhalten einer Oleosomzusammensetzung umfasst, wobei die Hochschermischung mittels eines Rotor-Stator-Hochschermischers bei einer Spitzengeschwindigkeit in einem Bereich von 1,6 bis 12,8 m/s angewendet wird oder wobei die Hochscherzentrifugalkraft mittels einer Tellerzentrifuge bei einer Rotationsgeschwindigkeit in einem Bereich von 15.000 g bis 20.000 g angewendet wird.

2. Verfahren nach Anspruch 1, wobei die Oleosomzusammensetzung ferner einem Wärmebehandlungsschritt unterzogen wird.

3. Verfahren nach Anspruch 1 oder 2, wobei die Oleosomzusammensetzung ferner einem Dehydratisierungsschritt unterzogen wird.

4. Verfahren nach einem der vorstehenden Ansprüche, wobei die Hochschermischung auf isolierte Oleosomen angewendet wird, die bei einem pH-Wert in einem Bereich von 3,5 bis 10,0 liegen und/oder die einen Trockenmassegehalt in einem Bereich von 30 bis 80 Gewichts-% der isolierten Oleosomen aufweisen.

5. Verfahren nach einem der vorstehenden Ansprüche, und wobei die Hochschermischung für einen Zeitraum in einem Bereich von 2 bis 90 min angewendet wird.

6. Verfahren nach Anspruch 1, wobei die Hochscherzentrifugalkraft auf isolierte Oleosomen angewendet wird, die einen Proteingehalt in einem Bereich von 0,2 bis 3,0 Gewichts-% aufweisen.

7. Verfahren nach Anspruch 1 und 6, wobei die Hochscherzentrifugalkraft für einen Zeitraum von 20 bis 120 Sekunden angewendet wird.

8. Oleosomzusammensetzung, die aus einer pflanzlichen Quelle stammt, die aus der Gruppe ausgewählt ist, bestehend aus Raps, Sojabohnen, Sonnenblumen, Sonnenblumen mit hohem Ölsäuregehalt, braunen Leinsamen und gelben Leinsamen, und wobei
- die isolierte Oleosomzusammensetzung aus Raps einen durchschnittlichen Kügelchendurchmesser von mindestens 0,8 Mikrometer aufweist, oder
- die isolierte Oleosomzusammensetzung aus Sojabohnen einen durchschnittlichen Kügelchendurchmesser von mindestens 0,7 Mikrometer aufweist, oder
- die isolierte Oleosomzusammensetzung aus Sonnenblumen einen durchschnittlichen Kügelchendurchmesser von mindestens 5,6 Mikrometer aufweist, oder
- die isolierte Oleosomzusammensetzung aus Sonnenblumen mit hohem Ölsäuregehalt einen durchschnittlichen Kügelchendurchmesser von mindestens 1,4 Mikrometer aufweist, oder
- die isolierte Oleosomzusammensetzung aus braunen Leinsamen einen durchschnittlichen Kügelchendurchmesser von mindestens 1,4 Mikrometer aufweist, oder
- die isolierte Oleosomzusammensetzung aus gelben Leinsamen einen durchschnittlichen Kügelchendurchmesser von mindestens 3,2 Mikrometer aufweist.

9. Lebensmittel- und Futtermittelprodukte, pharmazeutische Produkte, Körperpflegeprodukte, Nährstoffzusammensetzungen und Industrieprodukte, umfassend die Oleosomzusammensetzung nach Anspruch 8.

10. Nährstoffzusammensetzung nach Anspruch 9, und die Nährstoffzusammensetzung umfassend die Oleosomzusammensetzung in einem Bereich von 1 bis 70 Gew.-%, bezogen auf eine Trockenmasse der Nährstoffzusammensetzung und mindestens einen anderen Nährstoffbestandteil als Oleosomen.

11. Verfahren zum Herstellen der Nährstoffzusammensetzung nach Anspruch 10 und das Verfahren umfassend die Schritte eines Vermischens der Oleosomzusammensetzung nach Anspruch 8 mit mindestens einem anderen Nährstoffbestandteil außer Oleosomen und wobei das Verfahren keinen weiteren Schritt einer Emulgierung der Oleosomzusammensetzung mit der mindestens einen anderen Nährstoffzusammensetzung umfasst.

12. Verfahren nach Anspruch 11, wobei das Verfahren einen Dehydratisierungsschritt vor und/oder nach dem Vermischen umfasst.

13. Verwendung eines Rotor-Stator-Hochschermischers und/oder einer Tellerzentrifuge zum Vergrößern des durchschnittlichen Kügelchendurchmessers von Oleosomen in einer Oleosomzusammensetzung, wobei das Hochschermischen mittels eines Rotor-Stator-Hochschermischers bei einer Spitzengeschwindigkeit in einem Bereich von 1,6 bis 12,8 m/s angewendet wird oder wobei die Hochscherzentrifugalkraft mittels einer Tellerzentrifuge bei einer Rotationsgeschwindigkeit in einem Bereich von 15.000 g bis 20.000 g angewendet wird.

## Revendications

1. Procédé destiné à élargir les oléosomes et le procédé comprend la soumission des oléosomes isolés à un mélange à haut cisaillement et/ou à une force centrifuge à haut cisaillement, et à obtenir une composition d'oléosomes, dans lequel le mélange à haut cisaillement est appliqué au moyen d'un mélangeur à haut cisaillement à rotor-stator à une vitesse de pointe comprise entre 1,6 à 12,8 m/s, ou dans lequel la force centrifuge à cisaillement élevé est appliquée au moyen d'une centrifugeuse à empilement de disques à une vitesse de rotation comprise entre 15 000 g et 20 000 g.

2. Procédé selon la revendication 1, dans lequel la composition d'oléosomes est soumise à une étape de traitement thermique.

3. Procédé selon la revendication 1 ou la revendication 2, dans lequel la composition d'oléosomes est soumise à une étape de déshydratation.

4. Procédé selon l'une quelconque des revendications précédentes, dans lequel le mélange à haut cisaillement est appliqué à des oléosomes isolés dont le pH est compris entre 3,5 et 10,0 et/ou dont la teneur en matière sèche est comprise entre 30 et 80 % en poids des oléosomes isolés.

5. Procédé selon l'une quelconque des revendications précédentes, dans lequel le mélange à haut cisaillement est appliqué pendant une période de temps comprise entre 2 et 90 minutes.

6. Procédé selon la revendication 1, dans lequel la force centrifuge à cisaillement élevé est appliquée à des oléosomes isolés dont la teneur en protéines est comprise entre 0,2 et 3,0 % en poids.

7. Procédé selon la revendication 1 et la revendication 6, dans lequel la force centrifuge à cisaillement élevé est appliquée pendant une période de temps de 20 à 120 secondes.

8. Composition d'oléosomes provenant d'une source végétale choisie dans le groupe constitué de colza, soja, tournesol, tournesol à haute teneur en acide oléique, graines de lin brunes et graines de lin jaunes, et dans laquelle
- la composition d'oléosomes isolés de graines de colza a un diamètre moyen de globule d'au moins 0,8 micron, ou
- la composition d'oléosomes isolés de soja a un diamètre moyen de globule d'au moins 0,7 micron, ou
- la composition d'oléosomes isolés de tournesol a un diamètre moyen de globule d'au moins 5,6 microns, ou
- la composition d'oléosomes isolés de tournesol à haute teneur en acide oléique a un diamètre moyen de globule d'au moins 1,4 micron, ou
- la composition d'oléosomes isolés de graines de lin brunes a un diamètre moyen de globule d'au moins 1,4 micron, ou
- la composition d'oléosomes isolés de graines de lin jaune a un diamètre moyen de globule d'au moins 3,2 microns.

9. Produits alimentaires, produits pharmaceutiques, produits de soins personnels, compositions nutritionnelles et produits industriels comprenant la composition d'oléosomes selon la revendication 8.

10. Composition nutritionnelle selon la revendication 9 et la composition nutritionnelle comprend la composition d'oléosomes dans une plage allant de 1 à 70 % de la matière sèche de la composition nutritionnelle et au moins un ingrédient nutritionnel autre que les oléosomes.

11. Procédé de préparation de la composition nutritionnelle selon la revendication 10, et le procédé comprend les étapes de mélange de la composition d'oléosomes selon la revendication 8 avec au moins un autre ingrédient nutritionnel autre que les oléosomes, et dans lequel le procédé ne comprend pas une étape supplémentaire d'émulsification de la composition d'oléosomes avec au moins une autre composition nutritionnelle.

12. Procédé selon la revendication 11, dans lequel le procédé comprend une étape de déshydratation avant et/ou après le mélange.

13. Utilisation d'un mélangeur à haut cisaillement à rotor-stator et/ou d'une centrifugeuse à empilement de disques pour augmenter le diamètre moyen des globules des oléosomes dans une composition d'oléosomes, dans laquelle le mélange à haut cisaillement est appliqué au moyen d'un mélangeur à haut cisaillement à rotor-stator à une vitesse de pointe comprise entre 1,6 et 12,8 m/s, ou dans laquelle la force centrifuge à haut cisaillement est appliquée au moyen d'une centrifugeuse à empilement de disques à une vitesse de rotation comprise entre 15 000 g et 20 000 g.
